(19) Europäisches Patentamt / European Patent Office / Office européen des brevets

(11) **EP 4 787 506 A1**

(12) **EUROPEAN PATENT APPLICATION**
published in accordance with Art. 153(4) EPC

(43) Date of publication:
05.08.2026 Bulletin 2026/32

(21) Application number: 24872317.3

(22) Date of filing: 25.09.2024

(51) International Patent Classification (IPC):
*H01M 8/04313* (2016.01)    *H01M 8/04* (2016.01)
*H01M 8/249* (2016.01)    *H01M 8/10* (2016.01)
*H01M 8/12* (2016.01)    *H01M 8/04992* (2016.01)
*H02J 3/38* (2026.01)

(52) Cooperative Patent Classification (CPC):
**H01M 8/04; H01M 8/04313; H01M 8/249;**
H01M 8/04992; H01M 8/10; H01M 8/12; H02J 3/38;
Y02E 60/50

(86) International application number:
**PCT/JP2024/034256**

(87) International publication number:
**WO 2025/070531 (03.04.2025 Gazette 2025/14)**

(84) Designated Contracting States:
**AL AT BE BG CH CY CZ DE DK EE ES FI FR GB**
**GR HR HU IE IS IT LI LT LU MC ME MK MT NL**
**NO PL PT RO RS SE SI SK SM TR**
Designated Extension States:
**BA**
Designated Validation States:
**GE KH MA MD TN**

(30) Priority: 27.09.2023 JP 2023166546

(71) Applicant: **Panasonic Intellectual Property**
**Management Co., Ltd.**
**Kadoma-shi, Osaka 571-0057 (JP)**

(72) Inventors:
• **KURAKI, Keisuke**
**Kadoma-shi, Osaka 571-0057 (JP)**

• **YAMAGUCHI, Yasushi**
**Kadoma-shi, Osaka 571-0057 (JP)**
• **KARINO, Tsuyoshi**
**Kadoma-shi, Osaka 571-0057 (JP)**
• **TAKEGUCHI, Shinsuke**
**Kadoma-shi, Osaka 571-0057 (JP)**
• **KAWAZOE, Daisuke**
**Kadoma-shi, Osaka 571-0057 (JP)**
• **MATSUMOTO, Taku**
**Kadoma-shi, Osaka 571-0057 (JP)**

(74) Representative: **Grünecker Patent- und**
**Rechtsanwälte**
**PartG mbB**
**Leopoldstraße 4**
**80802 München (DE)**

(54) **FUEL CELL SYSTEM**

(57)    A fuel cell system (100) according to the present disclosure includes: a plurality of fuel cell units (10); and a control device (20) configured to control the plurality of fuel cell units (10). The control device (20) predicts a design-life end time of each of the plurality of fuel cell units (10), ranks the plurality of fuel cell units (10) in ascending order of an interval from a date on which the control device (20) performs the prediction to the design-life end time, and determines the ranking as a replacement priority ranking of the plurality of fuel cell units (10).

EP 4 787 506 A1

FIG. 1

## Description

TECHNICAL FIELD

The present disclosure relates to a fuel cell system.

BACKGROUND ART

As a configuration for obtaining high power generation, a fuel cell system including a plurality of fuel cell units has been proposed. Patent Literature 1 discloses a fuel cell system including a plurality of fuel cells. In the fuel cell system of Patent Literature 1, to suppress a case where some of the plurality of fuel cells deteriorate earlier than the other fuel cells, fuel cells to be stopped from operating or started up are determined based on the number of startups of each fuel cell. Each fuel cell in Patent Literature 1 corresponds to a fuel cell unit.

CITATION LIST

Patent Literature

Patent Literature 1: JP 2023-47079 A

SUMMARY OF INVENTION

Technical Problem

The present disclosure provides a technique suitable, in a fuel cell system including a plurality of fuel cell units, for using all the fuel cell units constituting the system until close to the ends of their design lives.

Solution to Problem

A fuel cell system according to the present disclosure includes:

a plurality of fuel cell units; and
a control device configured to control the plurality of fuel cell units, wherein
the control device predicts a design-life end time of each of the plurality of fuel cell units, ranks the plurality of fuel cell units in ascending order of an interval from a date on which the control device performs the prediction to the design-life end time, and determines the ranking as a replacement priority ranking of the plurality of fuel cell units.

Advantageous Effects of Invention

The technique according to the present disclosure is suitable, in a fuel cell system including a plurality of fuel cell units, for using all the fuel cell units constituting the system until close to the ends of their design lives.

BRIEF DESCRIPTION OF DRAWINGS

FIG. 1 is a configuration diagram showing an example of a fuel cell system according to an embodiment.
FIG. 2 is a configuration diagram showing an example of a fuel cell unit constituting the fuel cell system shown in FIG. 1.
FIG. 3 is a diagram showing an example of a list indicating a replacement priority ranking of the fuel cell units determined by the control device of the fuel cell system according to the embodiment.
FIG. 4 is a flowchart for predicting a design-life end date of a fuel cell unit.
FIG. 5 is a diagram showing an example of a graph used for predicting the design-life end date.
FIG. 6 is a diagram showing an example of a method for determining a replacement date of each of the plurality of fuel cell units constituting the fuel cell system.

DESCRIPTION OF EMBODIMENTS

(Findings and the like underlying the present disclosure)

As described in the section BACKGROUND ART, Patent Literature 1 discloses a fuel cell system in which, to suppress a case where some of a plurality of fuel cell units deteriorate earlier than the other fuel cell units, fuel cell units to be stopped from operating or started up are determined based on the number of startups of each fuel cell unit. According to the fuel cell system disclosed in Patent Literature 1, it is possible to suppress a case where some of the plurality of fuel cell units deteriorate earlier than the other fuel cell units, substantially equalizing the design lives of all the fuel cell units constituting the system.

That is, in the fuel cell system disclosed in Patent Literature 1, all the fuel cell units reach the ends of their design lives at substantially the same time. Furthermore, in the fuel cell system disclosed in Patent Literature 1, since there is no difference in the number of startups among the plurality of fuel cell units, it is difficult for a user to predict which fuel cell unit reaches the end of the design life earlier.

In a fuel cell system including a plurality of fuel cell units, to prevent a case where a fuel cell unit becomes unable to generate power upon reaching the end of its design life and thus fails to follow a required power output, it is desirable to replace a fuel cell unit well in advance of the end of its design life. However, in the fuel cell system disclosed in Patent Literature 1, since it is unclear which fuel cell unit reaches the end of its design life earlier and which fuel cell unit should be replaced with priority, a user ends up selecting a fuel cell unit at random and starting replacement of the fuel cell unit. Therefore, in such a conventional fuel cell system, it is difficult to use the fuel cell units constituting the system until close to the ends of their design lives to the extent possible to increase the lifetime power generation.

In view of this, the present inventors have studied a technique suitable, in a fuel cell system including a plurality of fuel cell units, for using all the fuel cell units constituting the system until close to the ends of their design lives.

Embodiments are described in detail below with reference to the drawings. However, unnecessary detailed description may be omitted. For example, detailed description of well-known matters and repetitive description for substantially the same configuration may be omitted. This is to avoid the following description becoming unnecessarily redundant and to facilitate understanding by those skilled in the art.

The accompanying drawings and the following description are provided for those skilled in the art to fully understand the present disclosure, and are not intended to limit the subject matter described in the claims.

(Embodiments)

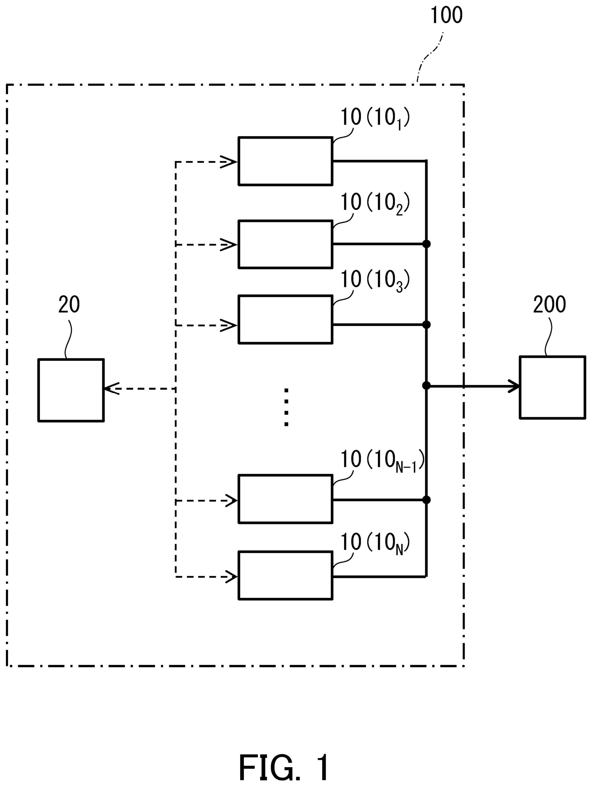

Embodiments are described below with reference to FIGS. 1 to 6.

[1-1. Configuration]

FIG. 1 is a configuration diagram showing an example of a fuel cell system according to Embodiment 1. As shown in FIG. 1, a fuel cell system 100 includes a plurality of fuel cell units 10 and a control device 20. The control device 20 controls the plurality of fuel cell units 10. Power generated and output by the fuel cell system 100 is supplied to a load 200.

In the example shown in FIG. 1, the fuel cell system 100 includes N fuel cell units 10, where N is an integer equal to or greater than 2. In FIG. 1, the N fuel cell units 10 are denoted as a first fuel cell unit 101, a second fuel cell unit 102, a third fuel cell unit 103, ..., an (N-1)th fuel cell unit 10N-1, and an Nth fuel cell unit 10N.

Examples of the load 200 include a factory, a hospital, a school, a commercial facility, and an office building.

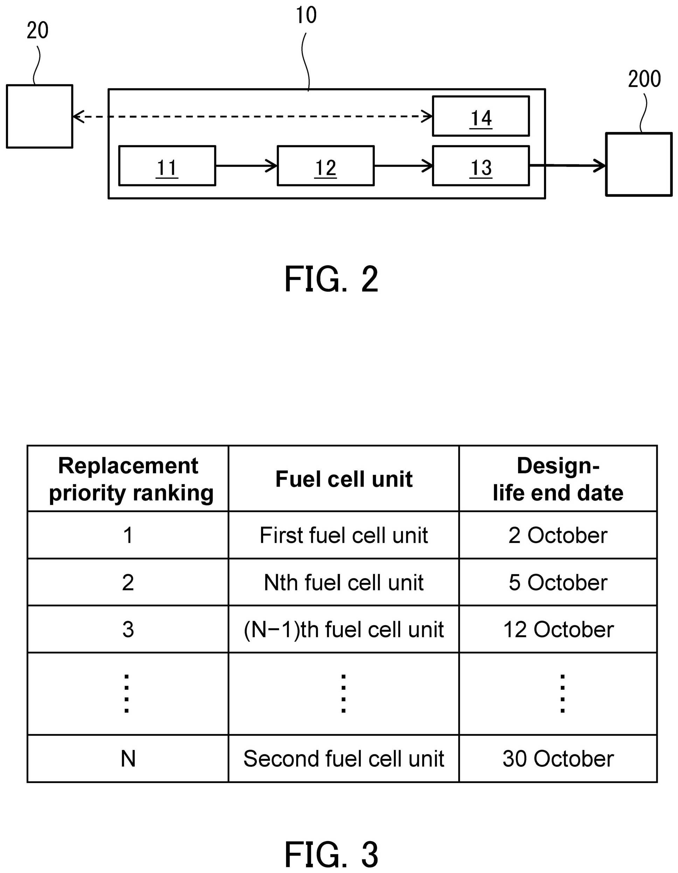

FIG. 2 is a configuration diagram showing an example of the fuel cell unit 10 constituting the fuel cell system 100 shown in FIG. 1.

The fuel cell unit 10 includes, for example, a fuel cell stack 11, a DC-DC converter 12, a DC-AC inverter 13, and a control unit 14. Examples of the fuel cell include a polymer electrolyte fuel cell, a solid oxide fuel cell, a phosphoric acid fuel cell, and a molten-carbonate fuel cell. A fuel gas and an oxidant gas are supplied to the fuel cell stack 11, and power is generated through a reaction between the fuel gas and the oxidant gas in the fuel cell stack 11, and direct-current power is output to the outside of the fuel cell stack 11. The DC-DC converter 12 converts the direct-current power output from the fuel cell stack 11 into direct-current power having a desired voltage. The DC-AC inverter 13 converts the direct-current power output from the DC-DC converter 12 into alternating-current power suitable for power supply to the outside of the fuel cell unit 10. The alternating-current power is supplied to the load 200, for example, via an electrical circuit provided outside the fuel cell system 100.

The control unit 14 is communicably connected to the control device 20 via a wired connection or a wireless connection. For example, the control unit 14 performs control necessary for operating the fuel cell unit 10 in accordance with a control signal received from the control device 20. For example, the control unit 14 controls operations of the DC-DC converter 12, the DC-AC inverter 13, and auxiliary devices (not shown), and the like. Examples of the auxiliary devices include a pump, a blower, and a valve. The pump and the blower feed, for example, the fuel gas and the oxidant gas to the fuel cell stack 11. The control unit 14 transmits, for example, data indicating generated power in the fuel cell system 100, data indicating a cumulative number of startups of the fuel cell unit 10, data indicating a cumulative startup duration of the fuel cell unit 10, and the like to the control device 20. The data indicating generated power may be, for example, data indicating the magnitude of a current output from the fuel cell unit 10. The data indicating the cumulative number of startups of the fuel cell unit 10 is obtained, for example, by counting a cumulative number of times a switch (not shown) for the fuel cell unit 10 provided in the fuel cell unit 10 is switched from OFF to ON. The data indicating the cumulative startup duration of the fuel cell unit 10 is obtained, for example, by counting a cumulative duration for which the switch (not shown) for the fuel cell unit 10 provided in the fuel cell unit 10 is in an ON state. The control unit 14 is, for example, a computer including a storage device storing a program necessary for operating the fuel cell unit 10, and a processor that reads the program from the storage device and executes the program.

The fuel used in the fuel cell unit 10 is, for example, pure hydrogen. In this case, the fuel cell system 100 further includes a tank (not shown) in which pure hydrogen is stored. Hydrogen gas serving as a fuel gas is supplied from the tank to the fuel cell stack 11. The fuel used in the fuel cell system 100 may include a hydrocarbon gas such as methane gas, propane gas, or butane gas. In this case, the fuel cell system 100 includes a reformer. In the reformer, a hydrogen-containing gas serving as a fuel gas is generated from the hydrocarbon gas, and the hydrogen-containing gas is supplied to the fuel cell stack 11. Examples of fuel including a hydrocarbon gas include city gas and LP gas.

As described above, the control device 20 controls the plurality of fuel cell units 10. The control device 20 is, for example, a computer including a storage device storing a program necessary for control and a processor that reads the program from the storage device and executes the program. The control device 20 may be provided near the fuel cell units 10, or may be provided at a location away from the fuel cell units 10. The functions of the control device 20 may be provided by a cloud server or an edge server.

In accordance with a command from the control device 20, the control unit 14 of each fuel cell unit 10 controls the DC-DC converter 12 and the DC-AC inverter 13. In accordance with a command from the control device 20, the control unit 14 of each fuel cell unit 10 controls the auxiliary devices such as a blower and a pump so that power is generated in the fuel cell unit 10.

The control device 20 can acquire, for example, from the control unit 14 of each fuel cell unit 10, data indicating power generated by the fuel cell unit 10, data indicating the cumulative number of startups of the fuel cell unit 10, data indicating the cumulative startup duration of the fuel cell unit 10, and the like. Thus, the control device 20 can acquire, for each of the plurality of fuel cell units 10, information on the fuel cell unit 10.

By increasing or decreasing the number of fuel cell units 10, it is possible to freely design a maximum output of the fuel cell system 100. The fuel cell units 10 can be operated independently of each other.

[1-2. Operation]

An example of an operation of the fuel cell system 100 configured as described above is described.

The control device 20 acquires information indicating required power from outside. The information indicating required power may be information provided to the control device 20 from a higher-level control device, or may be information input via a terminal by an administrator of the fuel cell system 100. For example, it is assumed that the required power is 500 kW. The control device 20 starts up a number of fuel cell units 10 sufficient to generate 500 kW of power. The method of selecting the fuel cell units 10 to be started up is not particularly limited. For example, the fuel cell units 10 to be started up are determined in accordance with an operation mode preset in the fuel cell system 100. There are many possible combinations of fuel cell units 10 to be started up.

The control device 20 predicts a design-life end time of each of the plurality of fuel cell units 10, ranks the plurality of fuel cell units 10 in ascending order of an interval from a date on which the control device 20 performs the prediction to the design-life end time, and determines the ranking as a replacement priority ranking of the plurality of fuel cell units 10.

Here, the design-life end time is a design-life end month, a design-life end week, or a design-life end date. That is, the fuel cell system 100 of the present embodiment can predict the end of the design life of each of the fuel cell units 10 in units of months, in units of weeks, or in units of days. For example, a user can set a unit in which the end of the design life is to be predicted from among months, weeks, and days.

In a fuel cell system including a plurality of fuel cell units such as the fuel cell system 100 of the present embodiment, to prevent a case where a fuel cell unit becomes unable to generate power upon reaching the end of its design life and thus fails to follow a required power output, it is desirable to replace a fuel cell unit well in advance of the end of its design life. On the other hand, it is also required that each fuel cell unit be used to the maximum extent possible until close to the end of its design life to further increase its lifetime power generation. As described above, the fuel cell system 100 of the present embodiment can predict the design-life end time of each of the plurality of fuel cell units 10, and determine the replacement priority ranking of the plurality of fuel cell units 10. Accordingly, a user can understand the design-life end time of each of the plurality of fuel cell units 10 and which fuel cell unit among the plurality of fuel cell units 10 reaches the end of its design life earlier and thus should be replaced with priority. Consequently, a user can replace the fuel cell units 10 in accordance with the determined replacement priority ranking, for example, by replacing the fuel cell units 10 with new ones in an order from higher to lower in the determined replacement priority ranking. Therefore, the fuel cell system 100 of the present embodiment can avoid an issue where a fuel cell unit 10 becomes unable to generate power upon reaching the end of its design life and thus fails to follow a required power output, and simultaneously can use all the fuel cell units 10 constituting the fuel cell system 100 to the maximum extent possible until close to the ends of their design lives, thereby increasing the lifetime power generation. Thus, the fuel cell system 100 of the present embodiment is suitable for using all the fuel cells constituting the system until close to the ends of their design lives.

FIG. 3 shows an example of a list indicating the replacement priority ranking of the fuel cell units 10 determined by the control device 20 of the fuel cell system 100 according to the embodiment. The control device 20 may be configured to display such a list via a computer application. The list shown in FIG. 3 is an example in a case where the design-life end time is a design-life end date.

In the following, operations of the fuel cell system 100 of the present embodiment are described by way of example in which the design-life end time is a design-life end date; the same applies to a case where the design-life end time is a design-life end month or a design-life end week.

The prediction of the design-life end date by the control device 20 can be performed, for example, as follows.

The control device 20 predicts the design-life end date of each of the plurality of fuel cell units 10, for example, from the cumulative number of startups and the cumulative power generation duration of each of the plurality of fuel cell units 10. As described above, the control device 20 can acquire data indicating the cumulative number of startups and the cumulative power generation duration of each of the plurality of fuel cell units 10, for example, from the control unit 14 of a corresponding fuel cell unit 10. Thus, when both the cumulative number of startups and the cumulative power generation duration are used to predict the design-life end date of each fuel cell unit 10, a more accurate design-life end date of each fuel cell unit 10 can be predicted than when only one of the cumulative number of startups and the cumulative power generation duration is used for the prediction. Accordingly, the replacement priority ranking of the fuel cell units 10 determined based on such accurate design-life end dates is also more accurate. Therefore, the fuel cell system 100 of the present embodiment can more reliably use all the fuel cell units 10 constituting the fuel cell system 100 to the maximum extent possible until close to the ends of their design lives, thereby further increasing the lifetime power generation.

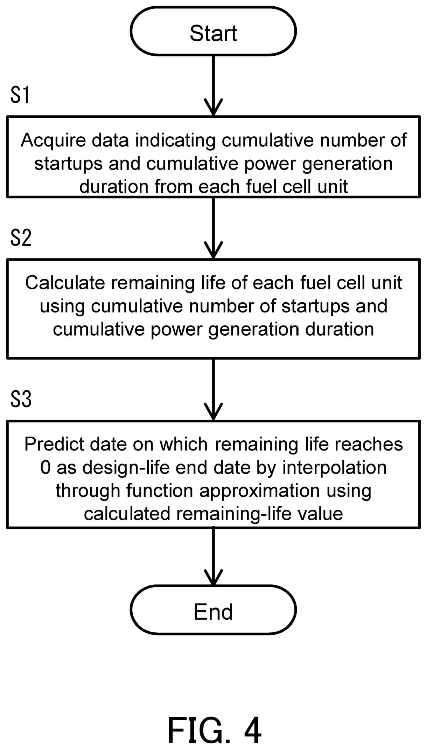

The design-life end date of the fuel cell unit 10 can be predicted, for example, using the cumulative number of startups and the cumulative power generation duration in accordance with the following procedure. FIG. 4 is a flowchart for predicting the design-life end date of the fuel cell unit 10. The control device 20 performs, for example, the processing shown in FIG. 4.

The control device 20 acquires data indicating the cumulative number of startups and the cumulative power generation duration from each fuel cell unit 10 (S1).

Next, the control device 20 calculates the remaining life of each fuel cell unit 10 using the cumulative number of startups and the cumulative power generation duration (S2). The remaining life is calculated by the following equation (1). The design-life number of startups is preset as an upper limit on the number of startups of each fuel cell unit 10. Similarly, the design-life power generation duration is preset as an upper limit on the power generation duration of each fuel cell unit 10.

Remaining life = 1 - MAX{(cumulative number of startups)/(design-life number of startups), (cumulative power generation duration)/(design-life power generation duration)} (1) $\qquad$ (1)

Specifically, the control device 20 calculates (cumulative number of startups)/(design-life number of startups) and (cumulative power generation duration)/(design-life power generation duration) using the data indicating the cumulative number of startups and the cumulative power generation duration acquired from each fuel cell unit 10. Next, the control device 20 calculates the remaining life using, as the value of MAX{(cumulative number of startups)/(design-life number of startups), (cumulative power generation duration)/(design-life power generation duration)} in the above equation (1), the larger of (cumulative number of startups)/(design-life number of startups) and (cumulative power generation duration)/(design-life power generation duration). The remaining life is calculated for all the fuel cell units 10 included in the fuel cell system 100.

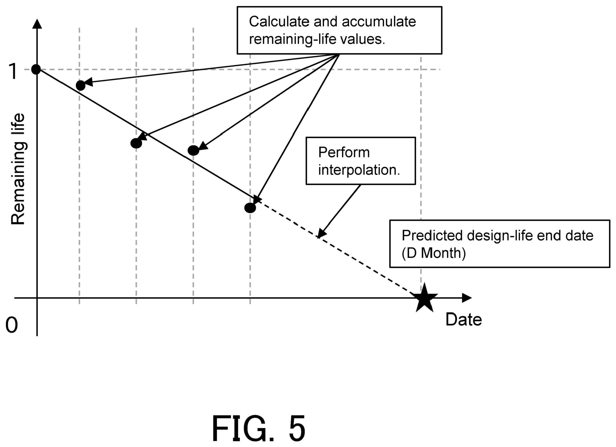

The control device 20 predicts a date on which the remaining life reaches 0 (zero) as the design-life end date (S3), for example, by interpolating the remaining life through function approximation, using a remaining-life value newly calculated in the processing of Steps S1 and S2 and remaining-life values previously calculated in the processing of Steps S1 and S2 and accumulated. The interpolation of the remaining life by function approximation may be, for example, linear interpolation or interpolation other than linear interpolation, such as quadratic interpolation. FIG. 5 shows an example of a graph used for predicting the design-life end date.

Through the processing of Steps S1 to S3 described above, the design-life end date of each fuel cell unit 10 is predicted.

Although an example of a method for predicting the design-life end date of the fuel cell unit 10 has been described, the design-life end date of the fuel cell unit 10 may be predicted by any other method.

The control device 20 may determine, for example, a replacement start date for the fuel cell units 10 based on the replacement priority ranking, the design-life end dates, and a replacement upper limit on the number of fuel cell units 10 to be replaced, the replacement upper limit being set on a per-day basis. Owing to the determination of the replacement start date for the fuel cell units 10, a user can understand when to start replacing the plurality of fuel cell units 10 constituting the fuel cell system 100, and consequently can easily make a schedule for replacement of the fuel cell units 10. Furthermore, since the replacement priority ranking and the design-life end dates are used for determining the replacement start date, the replacement start date can be set to a date such that all the fuel cell units 10 constituting the fuel cell system 100 can be used to the maximum extent possible until close to the ends of their design lives and the lifetime power generation can thereby be increased. Therefore, by starting replacement of the fuel cell units 10 constituting the fuel cell system 100 on the replacement start date thus determined, the fuel cell system 100 of the present embodiment can use all the fuel cell units 10 constituting the fuel cell system 100 to the maximum extent possible until close to the ends of their design lives, thereby increasing the lifetime power generation.

Here, the replacement upper limit on the number of fuel cell units 10 set on a per-day basis can be, for example, freely set by a user. For example, a user may determine the number of fuel cell units 10 that can be replaced per day and set the determined number as the replacement upper limit. It is also possible to set a replacement upper limit that differs for each day of the week. For example, when the fuel cell units 10 can be replaced only on Sunday, it is also possible for a user to set the replacement upper limit for Sunday to, for example, 10, and set the replacement upper limit for the days of the week other than Sunday to 0.

An example of a method for determining a replacement start date is, for example, as follows.

The control device 20 determines, for example, in an order from higher to lower in the replacement priority ranking of the plurality of fuel cell units 10 or in an order from lower to higher in the replacement priority ranking of the plurality of fuel cell units 10, a replacement date of each of the plurality of fuel cell units 10 constituting the fuel cell system 100 using the predicted design-life end date and the replacement upper limit. A replacement start date is determined based on the replacement dates of the plurality of fuel cell units 10 constituting the fuel cell system 100. That is, the earliest replacement date among the replacement dates assigned to the plurality of fuel cell units 10 constituting the fuel cell system 100 is determined as the "replacement start date".

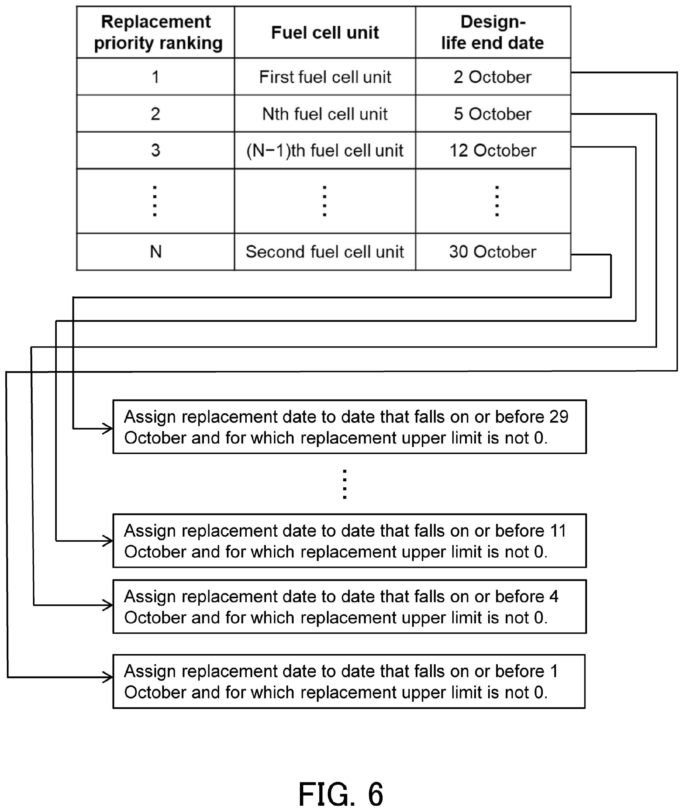

FIG. 6 is a diagram showing an example of a method for determining a replacement date of each of the plurality of fuel cell units 10 constituting the fuel cell system 100. FIG. 6 shows an example of a method for determining replacement dates in an order from lower to higher in the replacement priority ranking of the fuel cell units 10 (i.e., from fuel cell units 10 with predicted design-life end dates farther from the current date to fuel cell units 10 with predicted design-life end dates closer to the current date).

For example, the control device 20 creates a list indicating the replacement priority ranking of the fuel cell units 10 determined by the control device 20, such as the list shown in FIG. 3. In this list, the control device 20 assigns a replacement date to each fuel cell unit 10 in an order from lower to higher in the replacement priority ranking of the fuel cell units 10 (i.e., from fuel cell units 10 with predicted design-life end dates farther from the current date to fuel cell units 10 with predicted design-life end dates closer to the current date). The replacement date is assigned to a date that falls on or before the day immediately preceding the predicted design-life end date and for which the replacement upper limit is not 0. In assigning the replacement date of a fuel cell unit 10, when the total number of fuel cell units 10 assigned to that date exceeds the replacement upper limit, the control device 20 assigns the replacement date of the fuel cell unit 10 to a date that falls on or before that date and for which the replacement upper limit is not 0.

In assigning a replacement date to each fuel cell unit 10, it is desirable to assign the replacement date to a date for which the replacement upper limit is not 0 by shifting the replacement date to an earlier date by one day at a time, starting from the date immediately preceding the predicted design-life end date of the fuel cell unit 10. Accordingly, the fuel cell unit 10 can be used until immediately before the predicted design-life end date of the fuel cell unit 10, thereby further increasing the lifetime power generation of the fuel cell unit 10. In this case as well, when the total number of fuel cell units 10 assigned to the date assigned as the replacement date of the fuel cell unit 10 exceeds the replacement upper limit, the control device 20 determines the replacement date by further shifting the replacement date to an earlier date by one day at a time.

The above processing for determining the replacement date of each of the plurality of fuel cell units 10 constituting the fuel cell system 100 may be performed each time the design-life end date is predicted. That is, the processing for determining the replacement date described above may be performed after Step S3 shown in FIG. 4.

The prediction of the design-life end date of each fuel cell unit 10 and the determination of the replacement priority ranking of the fuel cell units 10 based on the predicted design-life end dates may be performed at any time. For example, the prediction and the determination may be performed once a day, once a week, or once a month. For example, the design-life end dates, the replacement priority ranking, the replacement dates, and the replacement start date for the fuel cell system 10 may be updated monthly by performing the processing shown in the flowchart of FIG. 4 once a month.

[1-3. Effects and the like]

As described above, in the present embodiment, the fuel cell system 100 includes the plurality of fuel cell units 10 and the control device 20 that controls the plurality of fuel cell units 10. The control device 20 predicts the design-life end time of each of the plurality of fuel cell units 10, ranks the plurality of fuel cell units 10 in ascending order of an interval from a date on which the control device 20 performs the prediction to the design-life end time, and determines the ranking as a replacement priority ranking of the plurality of fuel cell units 10.

Accordingly, a user can understand the design-life end time of each of the plurality of fuel cell units 10 and which fuel cell unit among the plurality of fuel cell units 10 reaches the end of its design life earlier and thus should be replaced with priority. Consequently, by replacing the fuel cell units 10 with new ones in accordance with the determined replacement priority ranking, a user can avoid an issue where a fuel cell unit 10 becomes unable to generate power upon reaching the end of its design life and thus fails to follow a required power output, and simultaneously can use all the fuel cell units 10 constituting the fuel cell system 100 to the maximum extent possible until close to the ends of their design lives, thereby increasing the lifetime power generation. Thus, the fuel cell system 100 of the present embodiment is suitable for using all the fuel cells constituting the system until close to the ends of their design lives.

As in the present embodiment, the control device 20 may predict the design-life end time from the cumulative number of startups and the cumulative power generation duration of each of the plurality of fuel cell units 10.

Accordingly, the fuel cell system 100 of the present embodiment can more reliably use all the fuel cell units 10 constituting the fuel cell system 100 to the maximum extent possible until close to the ends of their design lives, thereby further increasing the lifetime power generation.

As in the present embodiment, the design-life end time may be a design-life end date.

Accordingly, the fuel cell system 100 of the present embodiment can more reliably use all the fuel cell units 10 constituting the fuel cell system 100 to the maximum extent possible until close to the ends of their design lives, thereby further increasing the lifetime power generation.

As in the present embodiment, when the design-life end time is a design-life end date, the control device 20 may determine a replacement start date for the plurality of fuel cell units 10 based on the replacement priority ranking, the design-life end dates, and the replacement upper limit on the number of fuel cell units 10 to be replaced, the replacement upper limit being set on a per-day basis.

Accordingly, the fuel cell system 100 of the present embodiment can use all the fuel cell units 10 constituting the fuel cell system 100 to the maximum extent possible until close to the ends of their design lives, thereby increasing the lifetime power generation. Furthermore, a user can understand when to start replacing the plurality of fuel cell units 10 constituting the fuel cell system 100, and consequently can easily make a schedule for replacement of the fuel cell units 10.

As in the present embodiment, when the design-life end time is a design-life end date, the control device 20 may determine, in an order from higher to lower in the replacement priority ranking of the plurality of fuel cell units 10 or in an order from lower to higher in the replacement priority ranking of the plurality of fuel cell units 10, a replacement date of each of the plurality of fuel cell units 10 using the design-life end date and the replacement upper limit, and may determine the replacement start date based on the replacement dates of the plurality of fuel cell units 10.

Accordingly, the fuel cell unit 10 can be used until immediately before the predicted design-life end date of the fuel cell unit 10, thereby further increasing the lifetime power generation of the fuel cell unit 10.

(Other embodiments)

As described above, embodiments have been described by way of example of the technique disclosed in the present application. However, the technique according to the present disclosure is not limited thereto, and is applicable to embodiments with modifications, substitutions, additions, omissions, and the like.

In the present embodiment, the determination of the replacement start time for the fuel cell units 10 has been described in detail by way of example in which the design-life end time is a design-life end date; however, when the design-life end time is a design-life end month or a design-life end week, the replacement start time (i.e., a replacement start month or a replacement start week) can still be determined by the same method. For example, the control device 200 may determine the replacement start time for the plurality of fuel cell units 10 based on the replacement priority ranking, the design-life end times, and the replacement upper limit on the number of fuel cell units 10, the replacement upper limit being set on a per-period basis. Furthermore, in this case, the control device 20 determines, for example, in an order from higher to lower in the replacement priority ranking of the plurality of fuel cell units 10 or in an order from lower to higher in the replacement priority ranking of the plurality of fuel cell units 10, a replacement time of each of the plurality of fuel cell units 10 using the design-life end time and the replacement upper limit, and determines the replacement start time based on the replacement times of the plurality of fuel cell units 10.

The fuel cell system 100 according to the present disclosure may be used in coordination with a solar power generation apparatus. In a system in which a solar power generation apparatus and a fuel cell system supply power in coordination with each other, the fuel cell system is typically operated to provide supplemental power to compensate for shortfalls in power generated by the solar power generation apparatus. Accordingly, in many cases, only a required number of fuel cell units 10 among the plurality of fuel cell units 10 are started up and operated, and thus differences are likely to arise among the plurality of fuel cell units 10 in the cumulative number of startups and the cumulative power generation duration. By applying the technique of the present disclosure to such a power supply system in which determination regarding replacement of the fuel cell units 10 is difficult, the technique of the present disclosure can function effectively.

(Supplementary description)

From the description of the embodiments above, the following techniques are disclosed.

(Technique 1)

A fuel cell system including:

a plurality of fuel cell units; and
a control device configured to control the plurality of fuel cell units, wherein
the control device predicts a design-life end time of each of the plurality of fuel cell units, ranks the plurality of fuel cell units in ascending order of an interval from a date on which the control device performs the prediction to the design-life end time, and determines the ranking as a replacement priority ranking of the plurality of fuel cell units.

(Technique 2)

The fuel cell system according to Technique 1, wherein
the control device predicts the design-life end time from a cumulative number of startups and a cumulative power generation duration of each of the plurality of fuel cell units.

(Technique 3)

The fuel cell system according to Technique 1 or 2, wherein
the control device determines a replacement start time for the plurality of fuel cell units based on the replacement priority ranking, the design-life end times, and a replacement upper limit on the number of fuel cell units to be replaced, the replacement upper limit being set on a per-period basis.

(Technique 4)

The fuel cell system according to Technique 3, wherein
the control device determines, in an order from higher to lower in the replacement priority ranking of the plurality of fuel cell units or in an order from lower to higher in the replacement priority ranking of the plurality of fuel cell units, a replacement time of each of the plurality of fuel cell units using the design-life end time and the replacement upper limit, and determines the replacement start time based on the replacement times of the plurality of fuel cell units.

(Technique 5)

The fuel cell system according to any one of Techniques 1 to 4, wherein
the design-life end time is a design-life end date.

(Technique 6)

The fuel cell system according to Technique 5, wherein
the control device determines a replacement start date for the plurality of fuel cell units based on the replacement priority ranking, the design-life end dates, and a replacement upper limit on the number of fuel cell units to be replaced, the replacement upper limit being set on a per-day basis.

(Technique 7)

The fuel cell system according to Technique 6, wherein

the control device determines, in an order from higher to lower in the replacement priority ranking of the plurality of fuel cell units or in an order from lower to higher in the replacement priority ranking of the plurality of fuel cell units, a replacement date of each of the plurality of fuel cell units using the design-life end date and the replacement upper limit, and determines the replacement start date based on the replacement dates of the plurality of fuel cell units.

INDUSTRIAL APPLICABILITY

The technique according to the present disclosure is applicable to, for example, a system that supplies power using a solar power generation apparatus, a fuel cell, and a storage battery in coordination with one another. The technique according to the present disclosure is applicable to, for example, environmental protection initiatives, such as RE100 (Renewable Energy 100%), and the like.

**Claims**

1.  A fuel cell system comprising:

    a plurality of fuel cell units; and
    a control device configured to control the plurality of fuel cell units, wherein
    the control device predicts a design-life end time of each of the plurality of fuel cell units, ranks the plurality of fuel cell units in ascending order of an interval from a date on which the control device performs the prediction to the design-life end time, and determines the ranking as a replacement priority ranking of the plurality of fuel cell units.

2.  The fuel cell system according to claim 1, wherein
    the control device predicts the design-life end time from a cumulative number of startups and a cumulative power generation duration of each of the plurality of fuel cell units.

3.  The fuel cell system according to claim 1, wherein
    the control device determines a replacement start time for the plurality of fuel cell units based on the replacement priority ranking, the design-life end times, and a replacement upper limit on the number of fuel cell units to be replaced, the replacement upper limit being set on a per-period basis.

4.  The fuel cell system according to claim 3, wherein
    the control device determines, in an order from higher to lower in the replacement priority ranking of the plurality of fuel cell units or in an order from lower to higher in the replacement priority ranking of the plurality of fuel cell units, a replacement time of each of the plurality of fuel cell units using the design-life end time and the replacement upper limit, and determines the replacement start time based on the replacement times of the plurality of fuel cell units.

5.  The fuel cell system according to claim 1, wherein
    the design-life end time is a design-life end date.

6.  The fuel cell system according to claim 5, wherein
    the control device determines a replacement start date for the plurality of fuel cell units based on the replacement priority ranking, the design-life end dates, and a replacement upper limit on the number of fuel cell units to be replaced, the replacement upper limit being set on a per-day basis.

7.  The fuel cell system according to claim 6, wherein
    the control device determines, in an order from higher to lower in the replacement priority ranking of the plurality of fuel cell units or in an order from lower to higher in the replacement priority ranking of the plurality of fuel cell units, a replacement date of each of the plurality of fuel cell units using the design-life end date and the replacement upper limit, and determines the replacement start date based on the replacement dates of the plurality of fuel cell units.

FIG. 1

FIG. 2

| Replacement priority ranking | Fuel cell unit | Design-life end date |
|---|---|---|
| 1 | First fuel cell unit | 2 October |
| 2 | Nth fuel cell unit | 5 October |
| 3 | (N−1)th fuel cell unit | 12 October |
| ⋮ | ⋮ | ⋮ |
| N | Second fuel cell unit | 30 October |

FIG. 3

Start

S1

Acquire data indicating cumulative number of startups and cumulative power generation duration from each fuel cell unit

S2

Calculate remaining life of each fuel cell unit using cumulative number of startups and cumulative power generation duration

S3

Predict date on which remaining life reaches 0 as design-life end date by interpolation through function approximation using calculated remaining-life value

End

FIG. 4

FIG. 5

| Replacement priority ranking | Fuel cell unit | Design-life end date |
|:---:|:---:|:---:|
| 1 | First fuel cell unit | 2 October |
| 2 | Nth fuel cell unit | 5 October |
| 3 | (N−1)th fuel cell unit | 12 October |
| ⋮ | ⋮ | ⋮ |
| N | Second fuel cell unit | 30 October |

Assign replacement date to date that falls on or before 29 October and for which replacement upper limit is not 0.

⋮

Assign replacement date to date that falls on or before 11 October and for which replacement upper limit is not 0.

Assign replacement date to date that falls on or before 4 October and for which replacement upper limit is not 0.

Assign replacement date to date that falls on or before 1 October and for which replacement upper limit is not 0.

FIG. 6

**EP 4 787 506 A1**

## INTERNATIONAL SEARCH REPORT

| International application No. |
| --- |
| **PCT/JP2024/034256** |

| A. | CLASSIFICATION OF SUBJECT MATTER |
| --- | --- |

*H01M 8/04313*(2016.01)i; *H01M 8/04*(2016.01)i; *H01M 8/249*(2016.01)i; *H01M 8/10*(2016.01)n; *H01M 8/12*(2016.01)n; *H01M 8/04992*(2016.01)n; *H02J 3/38*(2006.01)n
FI:   H01M8/04313; H01M8/249; H01M8/04 Z; H01M8/10 101; H01M8/12 101; H01M8/04992; H02J3/38 170

According to International Patent Classification (IPC) or to both national classification and IPC

| B. | FIELDS SEARCHED |
| --- | --- |

Minimum documentation searched (classification system followed by classification symbols)

      H01M8/04313; H01M8/04; H01M8/249; H01M8/04992

Documentation searched other than minimum documentation to the extent that such documents are included in the fields searched

      Published examined utility model applications of Japan 1922-1996
      Published unexamined utility model applications of Japan 1971-2024
      Registered utility model specifications of Japan 1996-2024
      Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2022/209687 A1 (PANASONIC INTELLECTUAL PROPERTY MANAGEMENT CO., LTD.) 06 October 2022 (2022-10-06) | 1-7 |
| A | JP 2007-100305 A (KOMATSU LTD.) 19 April 2007 (2007-04-19) | 1-7 |
| P, A | WO 2024/116527 A1 (PANASONIC INTELLECTUAL PROPERTY MANAGEMENT CO., LTD.) 06 June 2024 (2024-06-06) | 1-7 |

☐ Further documents are listed in the continuation of Box C.     ☑ See patent family annex.

| | |
| --- | --- |
| \*   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **02 December 2024** | **10 December 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

International application No.

**PCT/JP2024/034256**

| Patent document cited in search report | | | Publication date (day/month/year) | Patent family member(s) | | | Publication date (day/month/year) |
|---|---|---|---|---|---|---|---|
| WO | 2022/209687 | A1 | 06 October 2022 | US | 2023/0411657 | A1 | |
| | | | | EP | 4318692 | A1 | |
| | | | | CN | 117099232 | A | |
| JP | 2007-100305 | A | 19 April 2007 | US | 2009/0259507 | A1 | |
| | | | | WO | 2007/037400 | A1 | |
| | | | | CA | 2623640 | A1 | |
| WO | 2024/116527 | A1 | 06 June 2024 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023047079 A